# EUROPÄISCHE PATENTSCHRIFT

(11) **EP 0 379 476 B1**
(45) Veröffentlichungstag und Bekanntmachung des Hinweises auf die Patenterteilung: **12.05.1993**
(21) Anmeldenummer: 90890005.3
(22) Anmeldetag: 08.01.1990
(51) Int. Cl.: F02B 27/02

(54) **Ansaugsystem für Brennkraftmaschinen mit mehreren Zylindern**
Intake system for multiple cylinder combustion engines
Système d'admission pour moteurs à combustion à plusieurs cylindres

(30) Priorität: 20.01.1989 AT 115/89
(43) Veröffentlichungstag der Anmeldung: 25.07.1990
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Bilek, Andreas, A-8046 Graz (AT)
(74) Vertreter: Krause, Walter, Dr. Dipl.-Ing.

(56) Entgegenhaltungen:
- EP-A- 0 355 960
- DE-A- 3 433 011
- US-A- 4 766 853
- PATENT ABSTRACTS OF JAPAN vol. 10, no. 14 (M-447) 21 Januar 1986, & JP-A-60 175730 (HONDA GIKEN KOGYO KK) 09 September 1985

## Beschreibung

Die Erfindung bezieht sich auf ein Ansaugsystem für Brennkraftmaschinen mit mehreren Zylindern, mit in Längsrichtung verlaufenden Saugrohren, die mit verschieden langen Krümmern mit dem zum Einlaßventil führenden Einlaßkanal verbunden sind, wobei ein Steuerorgan zur wahlweise Aktivierung eines der beiden Strömungswege vorgesehen ist.

Solche Ansaugsysteme wurden z.B. durch die DE-OS 34 33 011 oder die EP-A1-02 01 180 bekannt. Bei diesen bekannten Lösungen ist für jeden Krümmer ein Steuerorgan vorgesehen, durch das die wirksame Länge des Krümmers veränderbar ist. So sind gemäß der EP-A1-02 01 180 die Krümmer um einen Sammler herumgeführt wobei eine Öffnung im Krümmer vorhanden ist die mittels einem Steuerorgan verschließbar ist. Je nach der Stellung des Steuerorganes tritt daher die angesaugte Luft entweder über die Anschlußstelle des Krümmers am Sammler oder über die von dieser in Richtung zum zugehörigen Einlaßkanal hin distanzierten, vom Steuerorgan gesteuerten Öffnung in den Krümmer ein, wodurch sich entsprechend unterschiedliche Ansauglängen ergeben. Weiters ist durch die US-PS 4 766 853 ein Ansaugsystem bekannt, bei dem eine inzeiges Steuerorgan alle Einlaßkanäle steuert, wobei aber für jeden Einlaßkanal eine Klappe notwendig ist.

Der Nachteil dieser bekannten Lösungen liegt in der Vielzahl der erforderlichen Steuerorgane, bzw. Klappen, wodurch recht aufwendige und komplizierte Konstruktionen notwendig sind.

Ziel der Erfindung ist es, diese Nachteile zu vermeiden und ein Ansaugsystem der eingangs erwähnten Art vorzuschlagen, bei dem auf einfache Weise eine Veränderung der Ansauglänge möglich ist.

Erfindungsgemäß wird dies dadurch erreicht, daß ein einziges Steuerorgan in einer einzigen, vom gesamten Frischgas zur Versorgung aller Zylinder durchströmten Kammer vorgesehen ist, das die Einlässe zweier Gruppen von Sammlern steuert, wobei die Verbindung des einen Sammlers bzw. der einen der beiden Gruppen von Sammlern zum Einlaßkanal über Krümmer der einen Länge und die Verbindung des anderen Sammlers bzw. der anderen Gruppe von Sammlern über Krümmer einer anderen Länge erfolgt.

Durch diese Maßnahmen ist es auf einfache Weise möglich, mit einem einzigen Steuerorgan, z.B. einer Klappe, die Ansauglängen für sämtliche Krümmer zu steuern. Dadurch ergibt sich eine wesentliche Vereinfachung des Aufbaus. Außerdem wird dadurch auch eine relativ kompakte Bauweise ermöglicht.

Nach einem weiteren Merkmal der Erfindung kann vorgesehen sein, daß zwei außenliegende Sammler und zwei innenliegende Sammler zu je einer Gruppe zusammengefaßt sind, die über das Steuerorgan direkt mit der Kammer verbunden sind. Dabei kann weiters vorgesehen sein, daß eine Gruppe der Sammler über einen zentralen Sammler mit dem Steuerorgan verbunden ist.

Auf diese Weise ergibt sich ein besorders einfacher Aufbau des Ansaugsystems.

Um einen besonders kompakten Aufbau des Ansaugsystems zu ermöglichen, kann weiters vorgesehen sein, daß die an den äußeren Sammlern angeschlossenen Krümmer mit den zugehörigen inneren Sammler in an sich bekannter Weise gemeinsame Wände aufweisen, die in den den Einlaßkanälen näheren Bereichen der gemeinsamen Wände der inneren Sammler und der vorzugsweise oberhalb der inneren Sammler geführten Krümmer mit je einem Durchbruch versehen sind.

Durch diese Maßnahmen ist in Verbindung mit dem zentralen Steuerorgan sichergestellt, daß die Ansauglänge für jeden Zylinder mittels dem Steuerorgan verändert werden kann, wobei sich gleichzeitig ein einfacher Aufbau des Ansaugsystems ergibt.

Dabei kann zur Erzielung eines besonders kompakten Aufbaus weiters vorgesehen sein, daß die Krümmer der äußeren Sammler durch die inneren Sammler führen und im Bereich der Durchbrüche mit schnabelförmigen Mundstücken versehen sind. Dies ermöglicht eine besonders niedere Bauweise des Systems.

Die Erfindung wird nun anhand der Zeichnung näher erläutert. Dabei zeigen:
Fig. 1 schematisch das erfindungsgemäße Ansaugsystem im Schnitt senkrecht zur Kurbelwellenachse,
Fig. 2 einen Schnitt nach der Linie II-II in Fig. 1 in kleinerem Maßstab und die
Fig. 3 und 4 schematisch zwei andere Anordnungen der Sammler.

Von der Brennkraftmaschine sind die je drei Zylinder umfassenden Zylinderbänke 1 und 2 mit ihren Achsen 1' bzw. 2' in V-Form angeordnet. Die Achsen der einander zugekehrten Einlaßventile, angedeutet durch die Ventilsitzringe 3 bzw. 4, sind mit 5 bzw. 6 und die Achsen der außenliegenden Auslaßventile mit 7 bzw. 8 bezeichnet.

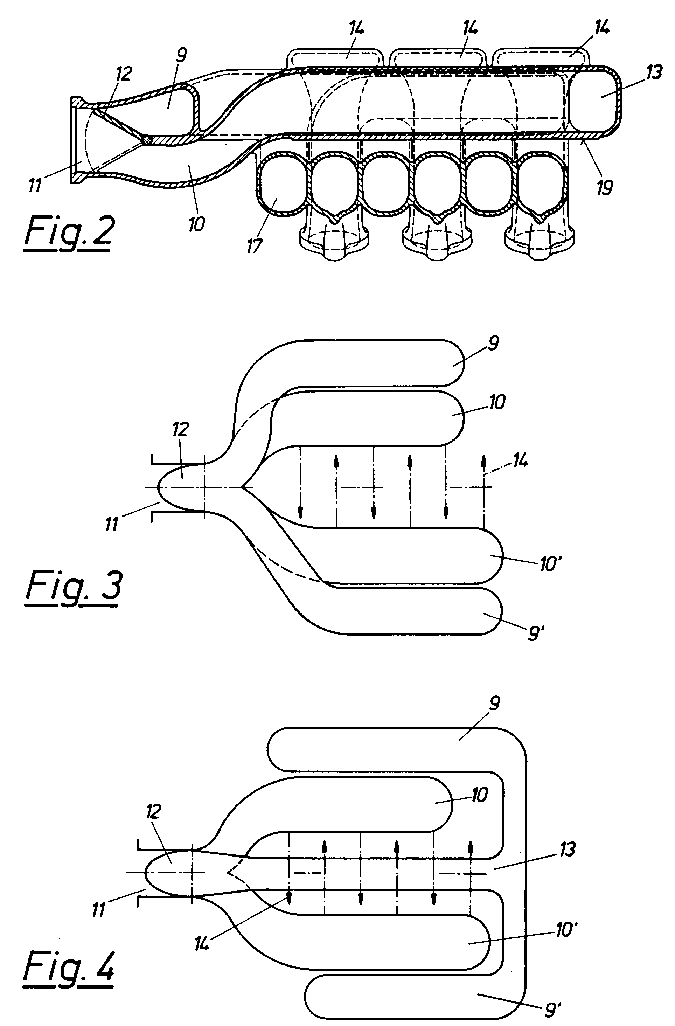

Wie aus den Fig. 2 bis 4 zu ersehen ist, weist das Ansaugsystem zwei Sammler, bzw. Gruppen von Sammlern 9, 10 auf, die von einer Kammer 11 abzweigen, in der ein als Klappe 12 ausgebildetes Steuerorgan angeordnet ist. Dieses Steuerorgan öffnet und schließt wahlweise die zu einem der beiden Sammler bzw. eine der beiden Gruppen von Sammlern 9, 10 führende Öffnung der Kammer 11. Dabei zweigt der eine Sammler 9 nach oben und der andere Sammler 10 nach unten von der Kammer 11 ab.

Die Sammler sind paarweise angeordnet, wobei die Sammler 9, 9' außen und die Sammler 10, 10' innen angeordnet sind. Die Sammler eines Paares 9, 9' bzw. 10, 10' zweigen gemeinsam von der Kammer 11 ab.

Dabei können, wie aus Fig. 3 zu ersehen ist, die beiden Paare von Sammlern 9, 9', bzw. 10, 10' direkt von der Kammer 11 abzweigen, oder es kann, wie aus Fig. 4 ersichtlich, eines der beiden Paare von Sammlern 9, 9' über einen zentralen Sammler 13 mit der Kammer 11 verbunden sein.

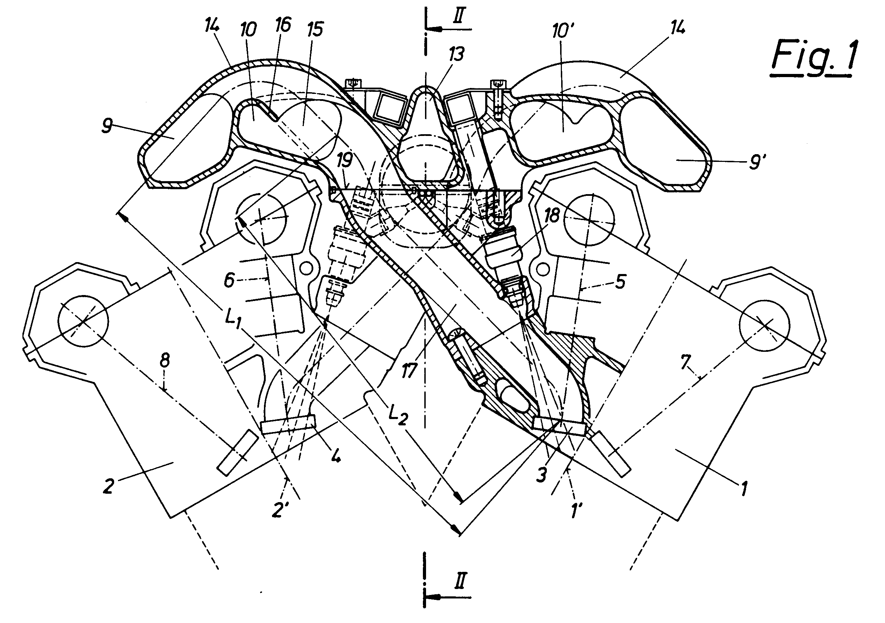

Wie aus der Fig. 1 zu ersehen ist, sind die Krümmer 14 an den außenliegenden Sammlern 9, 9' angeschlossen und verlaufen oberhalb der inneren Sammler 10, 10'. Dabei weisen die Krümmer 14 und die inneren Sammler 10, 10' gemeinsame Wände auf, in denen Öffnungen 15 angeordnet sind. Dabei durchdringen die Krümmer 14 zum Teil den entsprechenden inneren Sammler 10, 10'. Auf diese Weise kommt es zur Ausbildung von schnabelförmigen Mundstücken 16', die durch die gemeinsamen Wandbereiche der Krümmer 14 mit den zugehörigen inneren Sammlern 10, 10' gebildet sind.

Die Krümmer 14 führen aus den äußeren Sammlern 9 und 9' heraus und durchqueren die inneren Sammler 10 und 10' und führen anschließend weiter zu den Einlaufstücken 17 , wobei die Einlaufstücke 17 der Zylinder beider Reihen zu einem Bauteil vereinigt sind.

Im Falle, daß die Luft aus den Sammlern 9 und 9' bezogen wird, durchquert die Luft die innenliegenden Sammler 10 bzw. 10'. Die Durchquerung des inneren Sammlers 10 bzw. 10' durch den Krümmer 14 aus dem äußeren Sammler 9 bzw. 9' erfolgt durch ein Mundstück 16, das schnabelartig in den Sammler 9 bzw. 9' vorsteht. Dies bewirkt einerseits, daß beim Durchströmen vom Sammler 9 bzw. 9' über den Krümmer 14 in das jeweilige Einlaufstück 17 über die größere Länge L₁ die Ablösungen klein gehalten werden, andererseits, daß die Strömung aus dem inneren Sammler 10 in den Krümmer 14 hin zum Einlaufstück 17 über die kürzere Länge L₂ in der Umlenkung von diesem Mundstück 16 unterstützt wird. Auf diese Weise wird platzsparend die Kreuzung zweier Kanäle ohne nachteilige gegenseitige Störungen verwirklicht.

Die zu einem Bauteil zusammengefaßten Einlaufstücke 17 sind an beiden Zylinderkopfbänken 1 und 2 befestigt. In diesem Bauteil sind auch die Einspritzdüsen 18 untergebracht. Die Sammler 9, 9', 13, 10 und 10' und die jeweiligen Krümmer 14 sind als ein Bauteil ausgeführt, das entlang der Flanschfläche 19 mit den Einlaufstücken 17 verbunden ist. Dieses Bauteil könnte auch aus Kunststoff aus zwei Halbschalen hergestellt sein.

## Patentansprüche

1. Ansaugsystem für Brennkraftmaschinen mit mehreren Zylindern, mit in Längsrichtung verlaufenden Saugrohren, die mit verschieden langen Krümmern mit dem zum Einlaßventil führenden Einlaßkanal verbunden sind, wobei ein Steuerorgan zur wahlweisen Aktivierung eines der beiden Strömungswege vorgesehen ist, **dadurch gekennzeichnet**, daß ein einziges Steuerorgan (12) in einer einzigen, vom gesamten Frischgas zur Versorgung aller Zylinder durchströmten Kammer (11) vorgesehen ist, das die Einlässe zweier Gruppen von Sammlern (9, 9'; 10, 10') steuert, wobei die Verbindung des einen Sammlers bzw. der einen der beiden Gruppen von Sammlern (9, 9'; 10, 10') zum Einlaßkanal über Krümmer (14) der einen Länge (L₁) und die Verbindung des anderen Sammlers bzw. der anderen Gruppe von Sammlern über Krümmer einer anderen Länge (L₂) erfolgt.

2. Ansaugsystem nach Anspruch 1, **dadurch gekennzeichnet**, daß zwei außenliegende Sammler (9, 9') und zwei innenliegende Sammler (10, 10') zu je einer Gruppe zusammengefaßt sind, die über das Steuerorgan (12) direkt mit der Kammer (11) verbunden sind.

3. Ansaugsystem nach Anspruch 1 oder 2, **dadurch gekennzeichnet**, daß eine Gruppe der Sammler (10, 10') über einen zentralen Sammler (13) mit dem Steuerorgan (12) verbunden ist.

4. Ansaugsystem nach einem der Ansprüche 1 bis 3, **dadurch gekennzeichnet**, daß die an den äußeren Sammlern (9, 9') angeschlossenen Krümmer (14) mit den zugehörigen inneren Sammlern (10, 10') in an sich bekannter Weise gemeinsame Wände aufweisen, die in den den Einlaßkanälen näheren Bereichen der gemeinsamen Wände der inneren Sammler (10, 10') und der vorzugsweise oberhalb der inneren Sammler geführten Krümmer (14) mit je einem Durchbruch (15) versehen sind.

5. Ansaugsystem nach Anspruch 4, **dadurch gekennzeichnet**, daß die Krümmer der äußeren Sammler durch die inneren Sammler (10, 10') führen und im Bereich der Durchbrüche (15) mit schnabelförmigen Mundstücken (16) versehen sind.

## Claims

1. An intake system for multi-cylinder internal combustion engines, whose suction pipes are running in longitudinal direction and are connected to the intake channel leading towards the intake valve by means of manifold passages of different lengths, a control element being provided for selectively activating one of the two flow-paths, **wherein** one single control element (12) is provided in one single chamber (11) through which the entire volume of fresh charge is passed for the supply of all cylinders, which element (12) will control the inlets of two pairs of intake pipes (9, 9'; 10, 10'), the connection between one pipe, or one of the pairs of pipes (9, 9'; 10, 10'), and the intake channel being established by manifold passages (14) of one length (L₁) , and that of the other pipe, or pair of pipes, by passages of a different length (L₂).

2. An intake system according to claim 1, **wherein** two outer intake pipes (9, 9') and two inner intake pipes (10, 10') are combined into a pair each, which is directly connected with the chamber (11) via the control element (12).

3. An intake system according to claim 1 or 2, **wherein** one pair of intake pipes (10, 10') is connected with the control element (12) via a main intake pipe (13).

4. An intake system according to any of claims 1 to 3, wherein the manifold passages (14) connecting to the outer intake pipes (9, 9') have joint walls with the corresponding inner intake pipes (10, 10'), each of which walls is provided with an opening (15) in those areas of the joint walls of the inner pipes (10, 10') and the manifold passages (14) which are closer to the intake channels, the passages (14) preferably being located above the inner pipes (10, 10').

5. An intake system according to claim 4, wherein the manifold passages of the outer intake pipes penetrate the inner intake pipes (10, 10') and are provided with beak-shaped mouthpieces (16) at the openings (15).

## Revendications

1. Système d'admission pour moteurs à combustion interne à plusieurs cylindres, avec des pipes d'admission s'étendant dans le sens longitudinal, qui sont reliées par des coudes de différentes longueurs au canal d'entrée menant à la soupape d'admission, un organe de commande étant prévu pour activer au choix un des deux trajets d'écoulement, système d'admission caractérisé en ce qu'il est prévu un seul organe de commande (12) dans une seule chambre (11) traversée par tous les gaz frais d'alimentation de tous les cylindres, chambre qui commande les entrées de deux groupes de collecteurs (9, 9', 10, 10'), la liaison de l'un des collecteurs ou de l'un des deux groupes de collecteurs (9, 9'; 10, 10') ayant lieu avec le canal d'entrée par le coude (14) de l'une des longueurs, la longueur (L₁) et la liaison de l'autre collecteur ou de l'autre groupe de collecteurs ayant lieu par le coude d'une autre longueur (L₂).

2. Système d'admission selon la revendication 1 ou 2, caractérisé en ce que deux collecteurs situés à l'extérieur (9, 9') et deux collecteurs situés à l'intérieur (10, 10') sont réunis chacun en un groupe, groupes qui sont reliés par l'organe de commande (12) directement à la chambre (11).

3. Système d'admission selon la revendication 1 ou 2, caractérisé en ce qu'un groupe de collecteurs (10, 10') est relié par un collecteur central (13) à l'organe de commande (12).

4. Système d'admission selon l'une des revendications 1 à 3, caractérisé en ce que les coudes (14) raccordés aux collecteurs extérieurs (9, 9') présentent des parois communes d'une manière en soi connue avec les collecteurs intérieurs correspondants (10, 10'), parois qui sont pourvues dans les zones voisines des canaux d'entrée des parois communes des collecteurs intérieurs (10, 10') et des coudes (14) passant de préférence au-dessus du collecteur intérieur chacune d'une interruption (15).

5. Système d'admission selon la revendication 4, caractérisé en ce que les coudes des collecteurs extérieurs passent à travers les collecteurs intérieurs (10, 10') et sont munis dans les zones des interruptions (15) d'embouchures (16) en forme de bec.
